# EUROPÄISCHE PATENTSCHRIFT

(11) **EP 3 988 386 B1**
(45) Veröffentlichungstag und Bekanntmachung des Hinweises auf die Patenterteilung: **11.09.2024**
(21) Anmeldenummer: 21202171.1
(22) Anmeldetag: 12.10.2021
(51) Int. Cl.: B60M 1/30

(54) **STROMSCHIENENAUFLAUF**
BUSBAR END APPROACH RAMP
DISPOSITIF DE RÉCEPTION DE RAIL CONDUCTEUR

(30) Priorität: 20.10.2020 DE 202020105987 U; 15.12.2020 DE 202020107245 U
(43) Veröffentlichungstag der Anmeldung: 27.04.2022
(73) Patentinhaber: REHAU Industries SE & Co. KG, 95111 Rehau (DE)
(72) Erfinder: DEISTLER, Thomas, 95158 Kirchenlamitz (DE); MEINEL, Udo, 95111 Rehau (DE); KREUZER, Felix, 95514 Neustadt am Kulm (DE)

(56) Entgegenhaltungen:
- EP-B1- 1 339 562
- DE-A1- 102015 117 629
- DE-C1- 19 929 374
- DE-U1- 202019 103 824

## Beschreibung

Die Erfindung betrifft einen Stromschienenauflauf für Stromabnehmer elektrisch betriebener Bahnen, insbesondere S-Bahnen, U-Bahnen und dergleichen, umfassend wenigstens ein Basisprofil sowie wenigstens ein Gleitflächenprofil, wobei das Basisprofil einen Profilfuß, einen Profilkopf sowie einen diese verbindenden Profilsteg aufweist, wobei das Gleitflächenprofil am Basisprofil angeordnet ist.

Der Stromschienenauflauf ist im Stand der Technik bekannt und hat sich seit vielen Jahren bewährt.

Dieser Stromschienenauflauf wird mit einer Stromschiene verbunden, die im Allgemeinen aus einem Aluminiumprofil mit einer Gleitfläche aus Edelstahl besteht.

Der Stromschienenauflauf als Komponente in Verbindung mit der Stromschiene dient dazu, dass die Stromabnehmer von elektrisch betriebenen Bahnen die Gleitfläche aus Edelstahl als Lauffläche zur Stromabnahme benutzen. Die Gleitfläche wenigstens eines Bereiches des Stromschienenauflaufes ist dabei im Einlaufbereich unter einem geringen Winkel gegen die Horizontale geneigt und in einem horizontalen Übergangsbereich weitergeführt. Der Stromschienenauflauf wird regelmäßig als Anfang bzw. Ende einer parallel zum Bahngleis geführten und an Stromschienenträgern gehaltenen Stromschienensystem eingesetzt. Die DE 10 2015 117 629 A1 beschreibt einen solchen Stromschienenauflauf.

Die DE 19920088 A1 beschreibt einen Stromschienenendauflauf im Endbereich einer Stromschiene zur vertikal nach oben verlaufenden Führung der Stromabnehmerschleifschuhe eines Schienenfahrzeuges, wobei ein sich vom Ende der Stromschiene bis zu einem Langloch erstreckender, die Schleifflächenunterkante nicht verletzender, keilförmiger Einschnitt parallel zur Längsachse der Stromschiene vorgesehen ist, welcher sich zum Langloch hin verjüngt, wobei die eng aneinander gepressten Flächen des keilförmigen Einschnittes fest miteinander verbunden sind und sich zwischen Langloch und Schleifflächenunterkante eine Biegefeder mit relativ großem Biegeradius R ausbildet. Die eng aneinander gepressten Flächen des keilförmigen Einschnittes sind miteinander dauerhaft verbunden.

Nachteilig bei diesem Stromschienenauflauf ist dessen komplizierte und damit teure Herstellung.

Ein weiterer Nachteil dieses Stromschienenauflaufes besteht darin, dass durch die gewählte Konstruktion das gesamte Verbundprofil, insbesondere durch die Schlitzung, eine geringere mechanische Festigkeit bzw. Stabilität aufweist. Ebenfalls nachteilig bei dem Stromschienenauflauf ist dessen Lebensdauer, da insbesondere bei bestimmungsgemäßem Einsatz die Gleitfläche aus Edelstahl relativ schnell verschlissen ist und entweder gewechselt oder der komplette Stromschienenauflauf ersetzt werden muss.

Ein weiterer Stromschienenauflauf für Stromabnehmer elektrisch betriebener Bahnen ist aus der DE 394011 A bekannt. Dieser als Auflaufschiene bezeichnete Stromschienenauflauf für Stromabnehmer elektrischer Bahnen ist so aufgebaut, dass die Auflaufschiene durch Biegen oder durch Einfügen eines Einsatzstückes derart ausgebildet ist, dass sie der von der Bauart des Stromabnehmers, der Neigung der Auflauffläche und der Fahrgeschwindigkeit des Fahrzeugs abhängigen, einer Wurfkurve gleichenden Bahn des Stromabnehmerschuhes beim Übergang von der schrägen zur waagerechten Richtung angepasst wird, wodurch die Entstehung eines schädlichen Lichtbogens vermieden werden soll. Die Auflaufschiene soll in einem bestimmten Bereich in Form einer Parabel ausgebogen sein oder ein, mit entsprechender Erhöhung vorgesehenes, Einsatzstück aufweisen.

Nachteilig bei diesem Stromschienenauflauf ist dessen komplexer bzw. komplizierter Aufbau, sowie dessen daraus resultierende teure Herstellung und Montage.

Weiterhin nachteilig bei diesem Stromschienenträger ist es, dass bei der Anwendung auch hier die Gleitfläche aus Edelstahl durch die Stromabnehmer der elektrisch betriebenen Bahnen relativ schnell verschlissen ist und dass der komplette Stromschienenauflauf durch einen teuer hergestellten und aufwendig montierten neuen Stromschienenauflauf ersetzt werden muss.

Hier setzt die Erfindung ein, die sich die Aufgabe gestellt hat, einen Stromschienenauflauf aufzuzeigen, der die Nachteile des bekannten Standes der Technik überwindet, der kostengünstig und wirtschaftlich herstellbar ist, der schnell und sicher in bestehende Stromschienennetze montierbar bzw. demontierbar ist, wobei zusätzliche, zeitintensive Bearbeitungsschritte insbesondere der freien Enden der Stromschienen bzw. der Stromschienenaufläufe entfallen.

Erfindungsgemäß wird diese Aufgabe gelöst durch die Merkmale des Anspruches 1. Weitere vorteilhafte Ausgestaltungen sind in den Unteransprüchen beschrieben.

Es hat sich überraschend herausgestellt, dass ein Stromschienenauflauf für Stromabnehmer elektrisch betriebener Bahnen, insbesondere S-Bahnen, U-Bahnen und dergleichen, umfassend wenigstens ein Basisprofil sowie wenigstens ein Gleitflächenprofil, wobei das Basisprofil einen Profilfuß, einen Profilkopf sowie einen diese verbindenden Profilsteg aufweist, wobei das Gleitflächenprofil am Basisprofil angeordnet ist, wobei an wenigstens einem freien Ende wenigstens eine Führungsvorrichtung angeordnet ist, wobei die Führungsvorrichtung wenigstens eine Basis sowie wenigstens ein Führungselement aufweist, wobei die Basis am Profilsteg fixierbar ist, dass das Führungselement am Profilkopf und/oder am Profilsteg fixierbar ist, wobei das Führungselement wenigstens eine Führungsfläche aufweist, deren eines freies Ende in etwa bündig an der Oberseite des Gleitflächenprofils angeordnet ist, sich dadurch auszeichnet, dass das Material der Führungsvorrichtung eine Durchschlagsspannung von wenigstens 3 kV gemessen nach DIN EN 60243-1:2014-01 aufweist, dass das Material der Führungsvorrichtung eine Durchschlagsfestigkeit von wenigstens 6 kV / mm gemessen nach DIN EN 60243-1:2014-01 aufweist und dass die Führungsvorrichtung aus einem elektrisch nicht leitfähigen polymeren Material hergestellt ist.

Ein Vorteil des erfindungsgemäßen Stromschienenauflaufes besteht darin, dass bei bestimmungsgemäßer Verwendung, bei der das Stromschienensystem sowie der Stromschienenauflauf durch Abdeckungen vor unberechtigten Zugriff geschützt sind, bedingt durch die bei Temperatur-änderungen resultierende Längenausdehnungen des Stromschienensystems, es passieren kann, dass sowohl die Führungsvorrichtung als auch das Ende des Stromschienenauflaufes aus der Abdeckung ungeschützt herausragen. Somit ist bei dem erfindungsgemäßen Stromschienenauflauf, bei dem die Führungsvorrichtung aus einem elektrisch nicht leitfähigen Material besteht, die Sicherheit für das Bahn-bzw. Fachpersonal, welche sich im Bereich der Stromschienensysteme bewegen müssen, jederzeit gegeben. Weitere Vorteile des erfindungsgemäßen Stromschienenauflaufes sind die schnelle sowie einfache Montage / Demontage und auch die kostengünstige sowie wirtschaftliche Herstellung.

Es hat sich weiterhin als vorteilhaft herausgestellt, dass die Führungsfläche des Führungselements in etwa einem spitzen Winkel zur Oberseite des Gleitflächenprofils angeordnet ist.

Der Vorteil dieser Ausführung des erfindungsgemäßen Stromschienenauflaufes ist, dass bei bestimmungsgemäßer Verwendung insbesondere der Stromabnehmer der elektrischen Bahnen einfach, sicher und ohne Probleme zum Stromschienenauflauf führbar ist. Ebenfalls vorteilhaft ist, dass die Führungsfläche des Führungselements in einem Winkel von etwa 10° bis 45°, bevorzugt von etwa 15° bis 30° zur Oberseite des Gleitflächenprofils angeordnet ist. Hierdurch ist es möglich, sowohl Stromabnehmer unterschiedlichster Geometrien aber auch deformierte bzw. beschädigte Stromabnehmer sicher und ohne Probleme zum Stromschienenauflauf zu führen.

Die Führungsfläche des Führungselements kann in etwa einem Radius von R80 bis R180, bevorzugt R100 bis R150 zur Oberseite des Gleitflächenprofils angeordnet sein. Hierdurch wird eine besonders kostengünstige Herstellung sowie Montage des erfindungsgemäßen Stromschienenauflaufs möglich.

Ebenfalls vorteilhaft bei dem erfindungsgemäßen Stromschienenauflauf ist, dass die Führungsfläche des Führungselements in etwa parallel in Längsrichtung L des Gleitflächenprofils angeordnet ist. In dieser Ausgestaltung des erfindungsgemäßen Stromschienenauflaufes wird eine ausreichende mechanische Festigkeit bzw. Stabilität gewährleistet bei gleichzeitig optimaler Führung des Stromabnehmers einer elektrischen Bahn. Weiterhin ist die schräge Fläche des Stromschienenauflaufs vorteilhafterweise weiter verlängert.

Es hat sich weiterhin als vorteilhaft herausgestellt, dass die Führungsvorrichtung stoffschlüssig am freien Ende des Stromschienenauflaufs angeordnet ist.

Es liegt weiterhin im Rahmen der Erfindung, dass die Führungsvorrichtung kraftschlüssig am freien Ende des Stromschienenauflaufs angeordnet ist. Hierdurch ist einerseits eine wirtschaftliche und kostengünstige Herstellung des Stromschienenauflaufs möglich sowie andererseits eine hohe Flexibilität in der Herstellung/Montage.

Erfindungsgemäß ist der Stromschienenauflauf so ausgeführt, dass die Führungsvorrichtung aus einem elektrisch nicht leitfähigen Material hergestellt ist. Hier sind Materialien eingesetzt, deren elektrische Leitfähigkeit weniger als 10⁻⁸ S/cm beträgt. Weiterhin weisen diese Materialien einen spezifischen Widerstand von größer 10⁸ Ωcm auf. Neben der wirtschaftlichen und kostengünstigen Herstellung ist es somit vorteilhafter Weise auch möglich, bei bestimmungsgemäßer Verwendung des Stromschienenauflaufes die Stromabnehmer der elektrischen Bahnen zumindest anfänglich isolierend zu führen. Ein weiterer Vorteil besteht darin, dass temperaturbedingte Längenausdehnungen des Stromschienenauflaufs sowie der Führungsvorrichtung dazu führen, dass sich ein freies Ende des Stromschienenauflaufes sowie der Führungsvorrichtung so verschieben, dass sie unter der bestimmungsgemäß verwendeten Abdeckung ungeschützt herausragen. In dieser Situation führt der Einsatz eines erfindungsgemäßen Stromschienen-auflaufes mit einer, unter der Abdeckung herausragenden, Führungsvorrichtung, hergestellt aus einem elektrisch nicht leitfähigen Material, vorteilhafterweise zu einem Berührungsschutz für das Gleis-bzw. Bahnpersonal. Dies führt vorteilhafterweise weiter dazu, dass der erfindungsgemäße Stromschienenauflauf kostengünstig herstellbar und bei bestimmungs-gemäßem Gebrauch für Stromabnehmer elektrisch betriebener Bahnen eine hohe Verschleißfestigkeit aufweist.

Der erfindungsgemäße Stromschienenauflauf ist weiterhin so ausgebildet, dass die Führungsvorrichtung aus einem polymere Material hergestellt ist.

Unter polymeren Materialien sind Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint. Dabei können den polymeren Materialien geeignete Füllund / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen.

Duromere Materialien sind Materialien wie ungesättigte Polyesterharze, Epoxidharze, Polyurethane sowie Acrylharze.

Weiterhin vorteilhaft beim erfindungsgemäßen Stromschienenauflauf ist, dass die Führungsvorrichtung aus einem ungesättigten Polyesterharz mit einer Wärmeformbeständigkeit von wenigstens 200 °C nach EN ISO 75-2:2004-09 hergestellt ist. Hierdurch ist bei bestimmungsgemäßem Einsatz des erfindungsgemäßen Stromschienenauflaufs gesichert, dass die Führungsvorrichtung nicht durch thermische Beanspruchung einer erwärmten Stromschiene bzw. einen Lichtbogen des Stromabnehmers geschädigt ist.

Ebenso vorteilhaft beim erfindungsgemäßen Stromschienenauflauf ist, dass die Führungsvorrichtung aus einem ungesättigten Polyesterharz mit einer Kriechwegbildung von etwa CTI 600 gemäß DIN EN 60587:2008-03 hergestellt ist. Durch diese vorteilhaften CTI-Werte weist der erfindungsgemäße Stromschienenauflauf sowie insbesondere die Führungsvor-richtung überraschend eine sehr niedrige Kriechwegbildung gemäß DIN EN 60587:2008-03 auf.

Es hat sich weiterhin als vorteilhaft herausgestellt bei dem erfindungsgemäßen Stromschienenauflauf, dass das Material der Führungsvorrichtung wenigstens 30 % Glasfasern gemäß EN ISO 1172:1998-12 aufweist. Hierdurch können erfindungsgemäße Stromschienenaufläufe zur Verfügung gestellt werden, bei denen die Führungsvorrichtung einen Zug-E-Modul von wenigstens 13 GPa, sowie eine Zugfestigkeit von wenigstens 100 MPa gemäß EN ISO 527-5:2009-10 aufweisen.

Ein weiterer Vorteil des erfindungsgemäßen Stromschienenauflaufs besteht darin, dass die Führungsvorrichtung eine Biegefestigkeit von wenigstens 180 MPa, sowie einen Biege-E-Modul von wenigstens 10 GPa gemäß EN ISO 14125:2011-05 aufweist.

Der erfindungsgemäße Stromschienenauflauf ist vorteilhafterweise so ausgebildet, dass das Material der Führungsvorrichtung einen spezifischen Durchgangswiderstand von etwa 10¹² Ohm x cm gemäß DIN EN 62631-3-1 - Berichtigung 1 - September 2018 aufweist. Vorteilhafterweise ist hier ein Stromschienenauflauf zur Verfügung stellbar, der für verschiedenste Spannungen/Stromstärken von Stromschienensystemen elektrischer Bahnen universell einsetzbar ist.

Weiterhin ist der erfindungsgemäße Stromschienenauflauf so ausgebildet, dass das Material der Führungsvorrichtung einen spezifischen Oberflächenwiderstand von etwa 10¹² Ohm gemäß DIN EN 62631-3-2 Berichtigung 1 - 2018-09 aufweist. Durch diese vorteilhafte Ausgestaltung des erfindungsgemäßen Stromschienenauflaufes ist sichergestellt, dass die Stromabnehmer elektrisch betriebener Bahnen bei bestimmungsgemäßem Gebrauch sicher geführt sind, ohne das sich materialbedingte Probleme bilden, welche den Verschleiß derartiger Stromschienenaufläufe erhöhen.

Weiterhin vorteilhaft bei dem erfindungsgemäßen Stromschienenauflauf ist, dass die Führungsvorrichtung als Formteil im Spritzgießverfahren kostengünstig und wirtschaftlich herstellbar ist. Es liegt weiterhin im Rahmen der Erfindung, dass die Führungsvorrichtung des erfindungsgemäßen Stromschienenauflaufs als Profil ausgebildet und im Extrusions- bzw. Coextrusionsverfahren herstellbar ist.

Der erfindungsgemäße Stromschienenauflauf ist weiterhin vorteilhaft so ausgebildet, dass das Gleitflächenprofil eine Breite aufweist, die größer ist, als die Breite der Führungsvorrichtung. Die Breite des Gleitflächenprofils kann dabei etwa 60 bis 160 mm, bevorzugt etwa 80 bis 140 mm betragen. Durch diese vorteilhafte Ausgestaltung des erfindungsgemäßen Stromschienenauflaufes können verschieden dimensionierte sowie verschieden angeordnete Stromabnehmer elektrischer Bahnen über das freie Ende des erfindungsgemäßen Stromschienenauflaufes geführt und in Profillängsrichtung zum schmaleren Gleitflächenprofil der konventionellen Stromschiene übergeben werden.

Der erfindungsgemäße Stromschienenauflauf ist vorteilhafterweise so ausgebildet, dass das Basisprofil aus einem elektrisch gut leitenden Werkstoff wie beispielsweise Aluminium hergestellt ist mit einer elektrischen Leitfähigkeit von etwa 32 MS/m, während das Gleitflächenprofil aus einem sehr abriebfesten Werkstoff wie beispielsweise Edelstahl besteht, welcher eine Leitfähigkeit von wenigstens 1,6 MS/m aufweist.

Alternativ kann vorgesehen sein, dass die insbesondere die Führungsvorrichtung unter Verwendung eines generativen Fertigungsverfahrens, bspw. durch ein 3-D-Druckverfahren, hergestellt ist. Hierzu kann mit Vorteil ein datenverarbeitungsmaschinenlesbares dreidimensionales Modell für die Herstellung genutzt werden. Die Erfindung umfasst auch ein Verfahren zur Erzeugung eines datenverarbeitungsmaschinenlesbaren dreidimensionalen Modells zur Verwendung in einem Herstellungsverfahren für eine Führungsvorrichtung. Hierbei umfasst das Verfahren insbesondere auch die Eingabe von Daten, die eine Führungsvorrichtung darstellen, in eine Datenverarbeitungsmaschine und die Nutzung der Daten, um eine Führungsvorrichtung als dreidimensionales Modell darzustellen, wobei das dreidimensionale Modell geeignet ist zur Nutzung bei der Herstellung einer Führungsvorrichtung.

Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf eine Führungsvorrichtung abgegeben wird und die reflektierte Energie empfangen wird, und wobei ein virtuelles dreidimensionales Modell einer Führungsvorrichtung unter Verwendung einer Computerunterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), KunststoffPulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Erfindung soll nun an diesen nicht einschränkenden Ausführungsbeispielen näher beschrieben werden.

Es zeigen:
- Fig. 1: perspektivische Darstellung eines erfindungsgemäßen Stromschienenauflaufes;
- Fig. 2: perspektivische Detailansicht eines zweiten Bereiches eines erfindungsgemäßen Stromschienenauflaufes;
- Fig. 3: perspektivische Darstellung einer Führungsvorrichtung eines weiteren erfindungsgemäßen Stromschienenauflaufes.
- Fig. 4: perspektivische Detailansicht eines weiteren, zweiten Bereiches eines erfindungsgemäßen Stromschienenauflaufes;

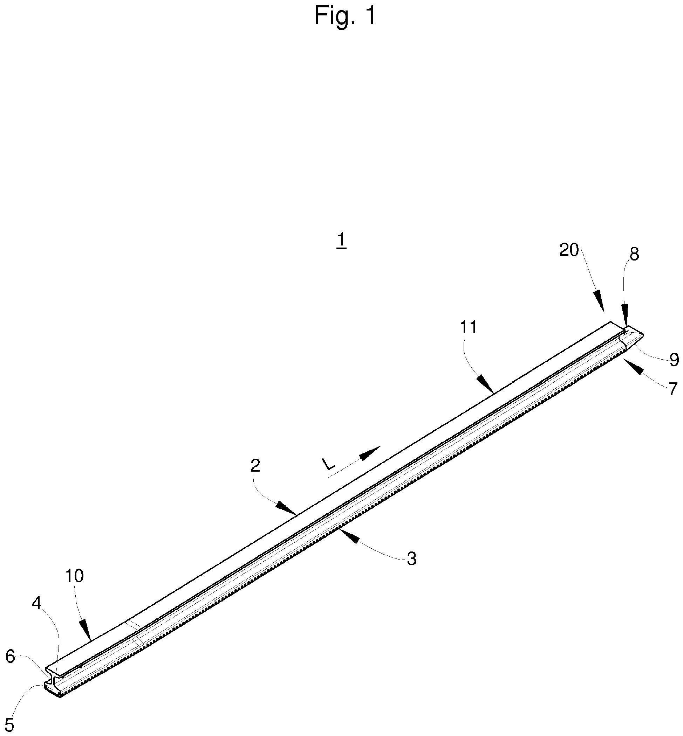

In der Fig. 1 ist eine perspektivische Darstellung des erfindungsgemäßen Stromschienenauflaufs 1 für Stromabnehmer elektrisch betriebener Bahnen dargestellt.

Der Stromschienenauflauf 1 umfasst ein Basisprofil 2 sowie ein Gleitflächenprofil 3.

Das Basisprofil 2 weist einen Profilfuß 4, einen Profilkopf 5 sowie einen diese verbindenden Profilsteg 6 auf. Das Gleitflächenprofil 3 überragt das Basisprofil 2 abdeckend.

Die Dicke des Gleitflächenprofils 3 entspricht in diesem Ausführungsbeispiel in etwa der Dicke des Profilstegs 6 des Basisprofils 2.

Der Stromschienenauflauf 1 ist so ausgebildet, dass er einen ersten Bereich 10 sowie einen zweiten Bereich 11 aufweist.

Bei bestimmungsgemäßer Verwendung ist der erste Bereich 10 des Stromschienenauflaufs 1 in etwa waagerecht/horizontal im Stromschienensystem angeordnet. Der erste Bereich 10 des Stromschienenauflaufs 1 hat eine Länge von etwa 0,2 m bis 0,8 m.

Der zweite Bereich 11 des Stromschienenauflaufs 1 ist stoffschlüssig mit dem ersten Bereich 10 verbunden.

Der zweite Bereich 11 des Stromschienenauflaufs 1 hat eine Länge von etwa 3 m bis 6 m, bevorzugt 4 m bis 5 m. Weiterhin ist der zweite Bereich 11 in etwa einem spitzen Winkel zum ersten Bereich 10. Stromschienenauflaufs 1 angeordnet.

Der zweite Bereich 11 ist in einem Winkel von etwa 0,5° bis 10°, bevorzugt 1° bis 5° am ersten Bereich 10 des Stromschienenauflaufs 1 angeordnet. In diesem Ausführungsbeispiel in einem Winkel von etwa 3°.

Am freien Ende 20 des Stromschienenauflaufes 1 ist wenigstens eine Führungsvorrichtung 7 angeordnet. Die Führungsvorrichtung 7 hat eine Länge von etwa 0,1 m bis 0,6 m, bevorzugt 0,1 m bis 0,4 m.

In diesem Ausführungsbeispiel ist die Führungsvorrichtung 7 stoffschlüssig am freien Ende 20 des zweiten Bereiches 11 des Stromschienenauflaufs 1 angeordnet.

Dies ist durch eine an sich bekannte Verschweißung oder Verklebung realisiert.

Die Führungsvorrichtung 7 weist eine Basis 8 sowie wenigstens ein Führungselement 9 auf. Die Basis 8 ist am Profilsteg 6 fixiert.

Das Führungselement 9 ist am Profilkopf 5 und/oder am Profilsteg 6 fixiert.

Die Führungsfläche, welche in dieser Figur nicht sichtbar ist, des Führungselementes 9 ist in etwa bündig an der Oberseite des Gleitflächenprofils 3 des erfindungsgemäßen Stromschienenauflaufes 1 angeordnet.

Das Material der Führungsvorrichtung 7 weist eine Durchschlagsspannung von etwa 5 kV gemessen nach DIN EN 60243-1:2014-01 auf. Das Material der Führungsvorrichtung 7 ist weiterhin so ausgebildet, dass es eine Durchschlagsfestigkeit von wenigstens 10 kV/mm gemessen nach DIN EN 60243-1:2014 - 01 aufweist. In diesem Ausführungsbeispiel weist das Material der Führungsvorrichtung 7 eine Durchschlagsfestigkeit von etwa 15 kV/mm gemessen nach DIN EN 60243-1:2014-01 auf.

Durch diese vorteilhafte Ausgestaltung ist die Führungsvorrichtung 7 so ausgebildet, dass bei bestimmungsgemäßer Verwendung des erfindungsgemäßen Stromschienenauflaufs 1 für Stromabnehmer elektrisch betriebener Bahnen sichergestellt ist, dass der Stromabnehmer nahezu ohne Lichtbogenbildung über die Führungsvorrichtung 7 mit dem Gleitflächenprofil 3 in elektrische Wirkverbindung treten kann.

Weiterhin ist der materialbedingte Verschleiß der Führungsvorrichtung 7 sowie des Gleitflächenprofils 3 durch diese bestimmungsgemäße Verwendung erheblich reduziert.

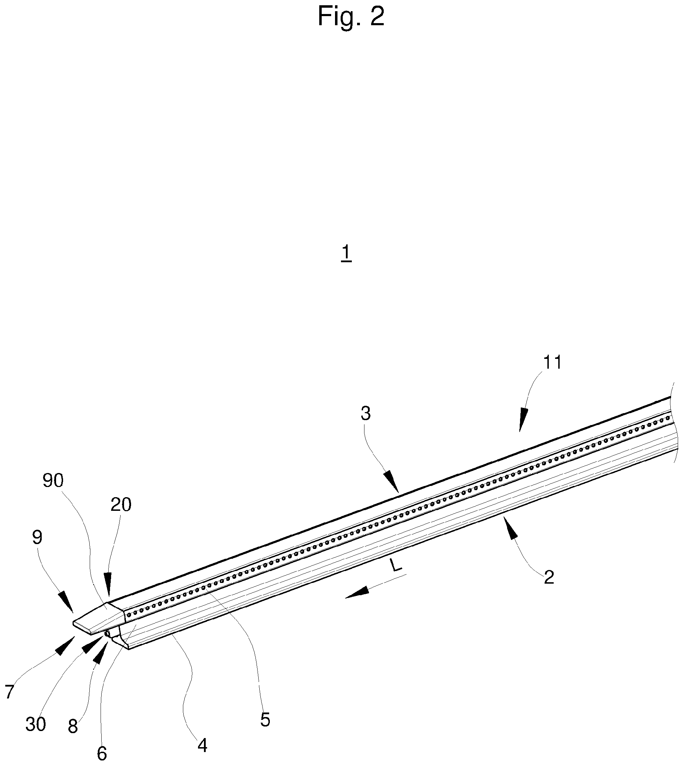

In der Fig. 2 ist eine perspektivische Detailansicht eines zweiten Bereiches 11 eines erfindungsgemäßen Stromschienenauflaufes 1 dargestellt.

Am freien Ende 20 des zweiten Bereiches 11 des Stromschienenauflaufes 1 ist wenigstens eine Führungsvorrichtung 7 angeordnet.

Die Führungsvorrichtung 7 weist eine Basis 8 sowie wenigstens ein Führungselement 9 auf. Die Basis 8 der Führungsvorrichtung 7 ist dabei am freien Ende 20 des zweiten Bereiches 11 des Stromschienenauflaufes 1 angeordnet. In diesem Ausführungsbeispiel ist die Basis 8 der Führungsvorrichtung 7 am Profilsteg 6 angeordnet

In diesem Ausführungsbeispiel ist die Führungsvorrichtung 7 weiter so ausgebildet, dass die Basis 8 in etwa die gleiche Breite wie der Profilsteg 6 des Basisprofils 2 aufweist.

Das Führungselement 9 der Führungsvorrichtung 7 ist weiterhin so ausgebildet, dass es in etwa die gleiche Breite aufweist, wie das Gleitflächenprofil 3 des Stromschienenauflaufes 1.

In diesem Ausführungsbeispiel ist die Führungsvorrichtung 7 weiter so ausgebildet, dass die Basis 8 sowie das Führungselement 9 über jeweils ein Fixierelement 30 kraftschlüssig mit dem Basisprofil 2 des Stromschienenauflaufes 1 verbunden sind.

Die Führungsvorrichtung 7 ist so ausgebildet, dass das Führungselement 9 wenigstens eine Führungsfläche 90 aufweist. Die Führungsfläche 90 des Führungselements 9 ist in etwa einem spitzen Winkel zur Oberseite des Gleitflächenprofils 3 angeordnet.

Weiterhin ist die Führungsfläche 90 des Führungselementes 9 in einem Winkel von etwa 10° bis 45°, bevorzugt von etwa 15° bis 30° zur Oberseite des Gleitflächenprofils 3 angeordnet. In diesem Ausführungsbeispiel ist die Führungsfläche 90 des Führungselementes 9 in einem Winkel von etwa 22° zur Oberseite des Gleitflächenprofils 3 angeordnet.

Es liegt jedoch auch im Rahmen der Erfindung, dass die Führungsfläche 90 des Führungselementes 9 in einem Radius von etwa R80 bis R180, bevorzugt R100 bis R150 angeordnet ist. In diesem Ausführungsbeispiel ist die Führungsfläche 90 des Führungselementes 9 in einem Radius von etwa R120 angeordnet.

Weiterhin ist die Führungsfläche 90 des Führungselementes 9 in etwa parallel in Längsrichtung L des Gleitflächenprofils 3 angeordnet.

Die Führungsvorrichtung 7 ist aus einem elektrisch nicht leitfähigen Material hergestellt, hier sind Materialien eingesetzt, deren elektrische Leitfähigkeit weniger als 10⁻⁸ S/cm beträgt. Weiterhin weisen diese Materialien einen spezifischen Widerstand von über 10⁸ Ωcm auf. Gemeint sind hier Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint. Dabei können den polymeren Materialien geeignete Füllund / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. In diesem Ausführungsbeispiel ist die Führungsvorrichtung 7 aus Polyamid (PA) mit etwa 30 Gew.-% Glasfasern gemäß EN ISO 1172:1998-12 hergestellt. Weiterhin weist das Material der Führungsvorrichtung 7, also das der Basis 8 sowie des Führungselements 9, eine Durchschlagsspannung von etwa 25 kV gemessen nach DIN EN 60243 -1:2014 - 01 auf. Weiter ist das Material der Führungsvorrichtung 7 so ausgebildet, dass es eine Durchschlagsfestigkeit von etwa 150 kV/mm gemessen nach DIN EN 60243 - 1:2014 - 01 aufweist.

Der erfindungsgemäße Stromschienenauflauf 1 ist vorteilhafterweise so ausgebildet, dass das Material der Führungsvorrichtung 7 in diesem Ausführungsbeispiel einen spezifischen Durchgangswiderstand von etwa 1 × 10¹² Ohm x cm gemäß DIN EN 62631 -3 - 1 - Berichtigung 1 - September 2018 aufweist. Es liegt auch im Rahmen der Erfindung, dass der erfindungsgemäße Stromschienenauflauf 1 so ausgebildet ist, dass das Material der Führungsvorrichtung 7 einen spezifischen Oberflächenwiderstand von 2 × 10¹² Ohm gemäß DIN EN 62631-3-2 Berichtigung 1- 2018-09 aufweist.

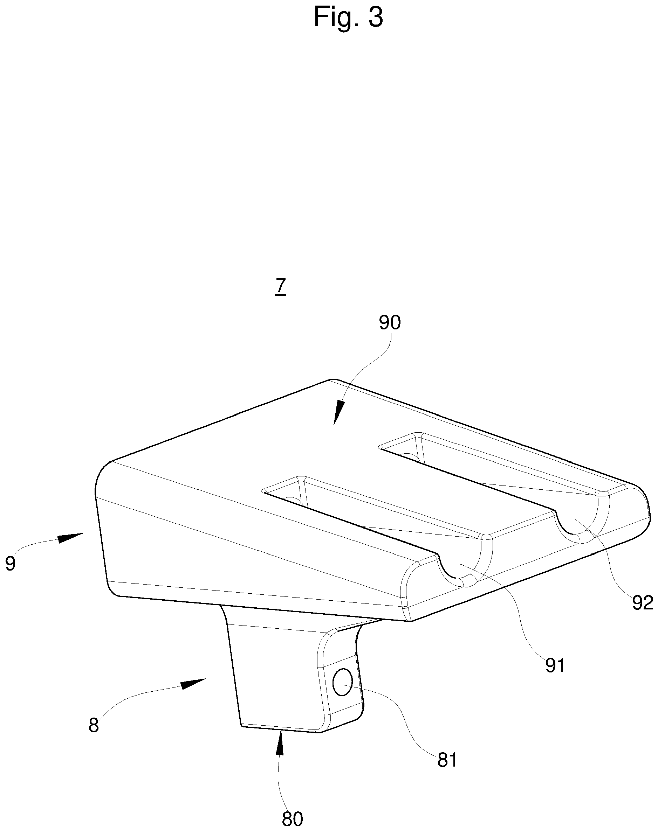

In der Fig. 3 ist eine perspektivische Darstellung einer Führungsvorrichtung 7 eines weiteren erfindungsgemäßen Stromschienenauflaufes dargestellt.

Die Führungsvorrichtung 7 weist dabei eine Basis 8 sowie ein mit dieser verbundenes Führungselement 9 auf.

Die Basis 8 der Führungsvorrichtung 7 weist in diesem Ausführungsbeispiel eine Öffnung 81 auf, in der ein geeignetes, hier nicht dargestelltes, Fixierelement einführbar ist, mit dem die Führungsvorrichtung 7 am freien Ende 20 eines Stromschienenauflaufes 1 fixierbar ist.

Das Führungselement 9 der Führungsvorrichtung 7 ist es so ausgebildet, dass es eine Führungsfläche 90 aufweist.

Die Führungsfläche 90 des Führungselementes 9 ist in etwa einem spitzen Winkel zur Unterseite 80 der Basis 8 der Führungsvorrichtung 7 ausgebildet.

Weiterhin ist die Führungsfläche 90 des Führungselements 9 in einem Winkel von etwa 10° bis 45°, bevorzugt von etwa 15° bis 30° zur Unterseite 80 der Basis 8 der Führungsvorrichtung 7 angeordnet. In diesem Ausführungsbeispiel ist die Führungsfläche 90 des Führungselements 9 in einem Winkel von etwa 20° zur Unterseite 80 der Basis 8 der Führungsvorrichtung 7 angeordnet.

Bei bestimmungsgemäßer Verwendung der Führungsvorrichtung 7 am freien Ende eines Stromschienenauflaufes ist die Führungsfläche 90 des Führungselements 9 dann ebenfalls in einem spitzen Winkel zur Oberseite des nicht dargestellten Gleitflächenprofils des Stromschienenauflaufes angeordnet.

Weiterhin ist die Führungsfläche 90 des Führungselements 9 bei bestimmungsgemäßer Verwendung in einem Winkel von etwa 10° bis 45°, bevorzugt von etwa 15° bis 30° zur Oberseite des Gleitflächenprofils angeordnet. In diesem Ausführungsbeispiel von etwa 20° zur Oberseite des Gleitflächenprofils 3.

Die Führungsvorrichtung 7 ist weiter so ausgebildet, dass die Führungsfläche 90 des Führungselementes 9 an seinem einem freien Ende wenigstens eine Öffnung 91, 92 aufweist. Die Öffnung 91,92 im Führungselement 9 ist bei bestimmungsgemäßer Verwendung dafür erforderlich, dass wenigstens ein (nicht dargestelltes) Fixierelement in die Öffnung 91,92 einbringbar ist.

Damit ist die Führungsvorrichtung 7, gemeinsam mit einem, in der Öffnung 81 der Basis 8 einbringbaren, weiteren, Fixierelement, kraftschlüssig fixierbar.

Bei dem erfindungsgemäßen Stromschienenauflauf 1 weist das Material der Führungsvorrichtung 7 wenigstens 30 Gew.-% Glasfasern gemäß EN ISO 1172:1998-12 auf. Hierdurch können erfindungsgemäße Stromschienenaufläufe 1 zur Verfügung gestellt werden, bei denen das Material der Führungsvorrichtung 7 einen Zug-E-Modul von wenigstens 13 GPa aufweist, sowie eine Zugfestigkeit von wenigstens 100 MPa gemäß EN ISO 527-5:2009:10 aufweist.

Die Führungsvorrichtung 7 ist in diesem Ausführungsbeispiel aus einem ungesättigten Polyesterharz mit einer Wärmeformbeständigkeit von wenigstens 200 °C nach EN ISO 75-2:2004-09 hergestellt.

Weiterhin weist das Material der Führungsvorrichtung 7 eine Durchschlagsspannung von etwa 27 kV gemessen nach DIN EN 60243-1:2014-01 auf. Das Material der Führungsvorrichtung 7 ist weiterhin so ausgebildet, dass es eine Durchschlagsfestigkeit von etwa 125 kV/mm gemessen nach DIN EN 60243 -1:2014-01 aufweist.

Es liegt weiterhin im Rahmen der Erfindung, dass das Material der Führungsvorrichtung 7 einen spezifischen Durchgangswiderstand von etwa 5 × 10¹² Ohm × cm gemäß DIN EN 62631-3-1 - Berichtigung 1 - September 2018 aufweist.

Weiter liegt es auch im Rahmen der Erfindung, dass das Material der Führungsvorrichtung 7 einen spezifischen Oberflächenwiderstand von etwa 7,5 ×10¹² Ohm gemäß DIN EN 62631-3-2 Berichtigung 1 - 2018-09 aufweist.

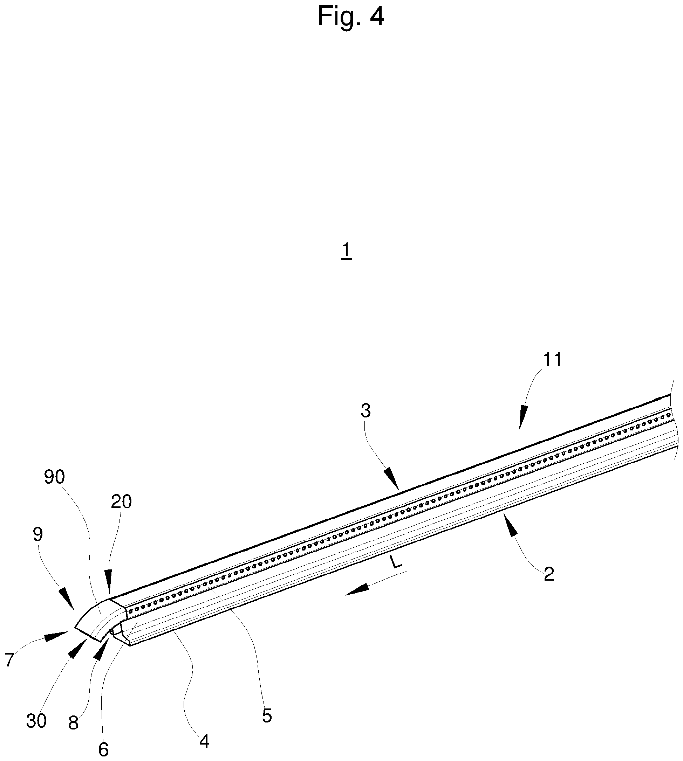

In der Fig. 4 ist eine perspektivische Detailansicht eines weiteren, zweiten Bereiches 11 eines erfindungsgemäßen Stromschienenauflaufes 1 dargestellt.

Am freien Ende 20 des zweiten Bereiches 11 des Stromschienenauflaufes 1 ist wenigstens eine Führungsvorrichtung 7 angeordnet.

Die Führungsvorrichtung 7 weist eine Basis 8 sowie wenigstens ein Führungselement 9 auf. Die Basis 8 der Führungsvorrichtung 7 ist dabei am freien Ende 20 des zweiten Bereiches 11 des Stromschienenauflaufes 1 angeordnet. In diesem Ausführungsbeispiel ist die Basis 8 der Führungsvorrichtung 7 am Profilsteg 6 angeordnet

In diesem Ausführungsbeispiel ist die Führungsvorrichtung 7 weiter so ausgebildet, dass die Basis 8 in etwa die gleiche Breite wie der Profilsteg 6 des Basisprofils 2 aufweist.

Das Führungselement 9 der Führungsvorrichtung 7 ist weiterhin so ausgebildet, dass es in etwa die gleiche Breite aufweist, wie das Gleitflächenprofil 3 des Stromschienenauflaufes 1. In diesem Ausführungsbeispiel ist die Führungsvorrichtung 7 weiter so ausgebildet, dass die Basis 8 sowie das Führungselement 9 über jeweils ein Fixierelement 30 kraftschlüssig mit dem Basisprofil 2 des Stromschienenauflaufes 1 verbunden sind.

Die Führungsvorrichtung 7 ist so ausgebildet, dass das Führungselement 9 wenigstens eine Führungsfläche 90 aufweist.

Die Führungsfläche 90 des Führungselementes 9 ist in einem Radius von etwa R80 bis R180, bevorzugt R100 bis R150 angeordnet ist. In diesem Ausführungsbeispiel ist die Führungsfläche 90 des Führungselementes 9 in einem Radius von etwa R120 angeordnet. Weiterhin ist die Führungsfläche 90 des Führungselementes 9 in etwa parallel in Längsrichtung L des Gleitflächenprofils 3 angeordnet.

Die Führungsvorrichtung 7 ist aus einem elektrisch nicht leitfähigen Material hergestellt, hier sind Materialien eingesetzt, deren elektrische Leitfähigkeit weniger als 10⁻⁸ S/cm beträgt. Weiterhin weisen diese Materialien einen spezifischen Widerstand von über 10⁸ Ωcm auf. Gemeint sind hier Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint. Dabei können den polymeren Materialien geeignete Füllund / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. In diesem Ausführungsbeispiel ist die Führungsvorrichtung 7 aus Polyamid (PA) mit etwa 30 Gew.-% Glasfasern gemäß EN ISO 1172:1998-12 hergestellt. Weiterhin weist das Material der Führungsvorrichtung 7, also das der Basis 8 sowie des Führungselements 9, eine Durchschlagsspannung von etwa 25 kV gemessen nach DIN EN 60243 -1:2014 - 01 auf. Weiter ist das Material der Führungsvorrichtung 7 so ausgebildet, dass es eine Durchschlagsfestigkeit von etwa 150 kV/mm gemessen nach DIN EN 60243 - 1:2014 - 01 aufweist.

Der erfindungsgemäße Stromschienenauflauf 1 ist vorteilhafterweise so ausgebildet, dass das Material der Führungsvorrichtung 7 in diesem Ausführungsbeispiel einen spezifischen Durchgangswiderstand von etwa 1 × 10¹² Ohm × cm gemäß DIN EN 62631 -3 - 1 - Berichtigung 1 - September 2018 aufweist. Es liegt auch im Rahmen der Erfindung, dass der erfindungsgemäße Stromschienenauflauf 1 so ausgebildet ist, dass das Material der Führungsvorrichtung 7 einen spezifischen Oberflächenwiderstand von 2 × 10¹² Ohm gemäß DIN EN 62631-3-2 Berichtigung 1- 2018-09 aufweist.

Durch diese vorteilhafte Ausgestaltung der Führungsvorrichtung 7 an wenigstens einem freien Ende 20 eines Stromschienenauflaufes 1 ist es nun erstmals möglich, erfindungsgemäße Stromschienenaufläufe kostengünstig und wirtschaftlich herzustellen, schnell sowie sicher in bestehende Stromschienensysteme zu montieren bzw. gegebenenfalls zu demontieren, wobei zusätzliche, zeit- und kostenintensive Bearbeitungsschritte insbesondere der freien Enden der Stromschienen bzw. der Stromschienenaufläufe entfallen.

## Patentansprüche

1. Stromschienenauflauf (1) für Stromabnehmer elektrisch betriebener Bahnen, insbesondere S-Bahnen, U-Bahnen und dergleichen, umfassend wenigstens ein Basisprofil (2) sowie wenigstens ein Gleitflächenprofil (3), wobei das Basisprofil (2) einen Profilfuß (4), einen Profilkopf (5) sowie einen diese verbindenden Profilsteg (6) aufweist, wobei das Gleitflächenprofil (3) am Basisprofil (2) angeordnet ist, wobei an wenigstens einem freien Ende (20) wenigstens eine Führungsvorrichtung (7) angeordnet ist, wobei die Führungsvorrichtung (7) wenigstens eine Basis (8) sowie wenigstens ein Führungselement (9) aufweist, wobei die Basis (8) am Profilsteg (6) fixierbar ist, wobei das Führungselement (9) am Profilkopf (5) und/oder am Profilsteg (6) fixierbar ist, wobei das Führungselement (9) wenigstens eine Führungsfläche (90) aufweist, deren eines freies Ende in etwa bündig an der Oberseite des Gleitflächenprofils (3) angeordnet ist, **dadurch gekennzeichnet, dass** das Material der Führungsvorrichtung (7) eine Durchschlagsspannung von wenigstens 3 kV gemessen nach DIN EN 60243-1:2014-01 aufweist, dass das Material der Führungsvorrichtung (7) eine Durchschlagsfestigkeit von wenigstens 6 kV / mm gemessen nach DIN EN 60243-1:2014-01 aufweist und dass die Führungsvorrichtung (7) aus einem elektrisch nicht leitfähigen polymeren Material hergestellt ist.

2. Stromschienenauflauf (1) nach Anspruch 1, **dadurch gekennzeichnet, dass** die Führungsfläche (90) des Führungselements (9) in etwa einem spitzen Winkel zur Oberseite des Gleitflächenprofils (3) angeordnet ist.

3. Stromschienenauflauf (1) nach einem der vorhergehenden Ansprüche, **dadurch gekennzeichnet, dass** die Führungsfläche (90) des Führungselements (9) in einem Winkel von etwa 10° bis 45°, bevorzugt von etwa 15° bis 30° zur Oberseite des Gleitflächenprofils (3) angeordnet ist.

4. Stromschienenauflauf (1) nach einem der vorhergehenden Ansprüche, **dadurch gekennzeichnet, dass** die Führungsfläche (90) des Führungselements (9) in etwa parallel in Längsrichtung L des Gleitflächenprofils (3) angeordnet ist.

5. Stromschienenauflauf (1) nach einem der vorhergehenden Ansprüche, **dadurch gekennzeichnet, dass** die Führungsvorrichtung (7) stoffschlüssig am freien Ende (10) des Stromschienenauflaufes (1) angeordnet ist.

6. Stromschienenauflauf (1) nach einem der Ansprüche 1 bis 4, **dadurch gekennzeichnet, dass** die Führungsvorrichtung (7) kraftschlüssig am freien Ende (10) des Stromschienenauflaufes (1) angeordnet ist.

7. Stromschienenauflauf (1) nach einem der vorhergehenden Ansprüche, **dadurch gekennzeichnet, dass** das Material der Führungsvorrichtung (7) einen spezifischen Durchgangswiderstand von etwa 10¹² Ohm × cm gemäß DIN EN 62631-3-1 - Berichtigung 1 - September 2018 aufweist.

8. Stromschienenauflauf (1) nach einem der vorhergehenden Ansprüche, **dadurch gekennzeichnet, dass** das Material der Führungsvorrichtung (7) einen spezifischen Oberflächenwiderstand von etwa 10¹² Ohm gemäß DIN EN 62631-3-2 Berichtigung 1 - 2018-09 aufweist.

## Claims

1. Conductor rail ramp (1) for current collectors of electrically operated trains, in particular city trains, underground trains and the like, comprising at least one base profile (2) and at least one sliding surface profile (3), wherein the base profile (2) has a profile foot (4), a profile head (5) and a profile web (6) connecting them, wherein the sliding surface profile (3) is arranged on the base profile (2), wherein at least one guide device (7) is arranged at at least one free end (20), wherein the guide device (7) comprises at least one base (8) and at least one guide element (9), wherein the base (8) can be fixed to the profile web (6), wherein the guide element (9) can be fixed to the profile head (5) and/or to the profile web (6), wherein the guide element (9) comprises at least one guide surface (90), one free end of which is arranged approximately flush with the upper face of the sliding surface profile (3), **characterised in that** the material of the guide device (7) has a breakdown voltage of at least 3 kV measured in accordance with DIN EN 60243-1:2014-01, **in that** the material of the guide device (7) has a dielectric strength of at least 6 kV/mm measured in accordance with DIN EN 60243-1:2014-01, and **in that** the guide device (7) is made of an electrically non-conductive polymer material.

2. Conductor rail ramp (1) according to claim 1, **characterised in that** the guide surface (90) of the guide element (9) is arranged at an approximately acute angle to the upper face of the sliding surface profile (3).

3. Conductor rail ramp (1) according to any of the preceding claims, **characterised in that** the guide surface (90) of the guide element (9) is arranged at an angle of approximately 10° to 45°, preferably of approximately 15° to 30°, to the upper face of the sliding surface profile (3).

4. Conductor rail ramp (1) according to any of the preceding claims, **characterised in that** the guide surface (90) of the guide element (9) is arranged approximately in parallel in the longitudinal direction L of the sliding surface profile (3).

5. Conductor rail ramp (1) according to any of the preceding claims, **characterised in that** the guide device (7) is arranged on the free end (10) of the conductor rail ramp (1) in a materially bonded manner.

6. Conductor rail ramp (1) according to any of claims 1 to 4, **characterised in that** the guide device (7) is arranged on the free end (10) of the conductor rail ramp (1) in a friction-locked manner.

7. Conductor rail ramp (1) according to any of the preceding claims, **characterised in that** the material of the guide device (7) has a specific volume resistance of approximately 1012 ohm x cm in accordance with DIN EN 62631-3-1 - Corrigendum 1 - September 2018.

8. Conductor rail ramp (1) according to any of the preceding claims, **characterised in that** the material of the guide device (7) has a specific surface resistance of approximately 1012 ohm in accordance with DIN EN 62631-3-2 - Corrigendum 1 - 2018-09.

## Revendications

1. Rampe de rail conducteur (1) pour pantographes de chemins de fer à traction électrique, notamment de trains de banlieue, de métros et similaires, comprenant au moins un profilé de base (2) ainsi qu'au moins un profilé de surface de glissement (3), le profilé de base (2) présentant un pied de profilé (4), une tête de profilé (5) ainsi qu'une entretoise de profilé (6) reliant ceux-ci, le profilé de surface de glissement (3) étant agencé sur le profilé de base (2), au moins un dispositif de guidage (7) étant agencé sur au moins une extrémité libre (20), le dispositif de guidage (7) présentant au moins une base (8) ainsi qu'au moins un élément de guidage (9), la base (8) pouvant être fixée sur l'entretoise de profilé (6), l'élément de guidage (9) pouvant être fixé sur la tête de profilé (5) et/ou sur l'entretoise de profilé (6), l'élément de guidage (9) présentant au moins une surface de guidage (90) dont une extrémité libre est agencée à peu près à fleur du côté supérieur du profilé de surface de glissement (3), **caractérisée en ce que** le matériau du dispositif de guidage (7) présente une tension de claquage d'au moins 3 kV mesurée selon la norme DIN EN 60243-1 : 2014-01, **en ce que** le matériau du dispositif de guidage (7) présente une résistance au claquage d'au moins 6 kV/mm mesurée selon la norme DIN EN 60243-1 : 2014-01 et **en ce que** le dispositif de guidage (7) est fabriqué dans un matériau polymère électriquement non conducteur.

2. Rampe de rail conducteur (1) selon la revendication 1, **caractérisée en ce que** la surface de guidage (90) de l'élément de guidage (9) est agencée à peu près à un angle aigu par rapport au côté supérieur du profilé de surface de glissement (3).

3. Rampe de rail conducteur (1) selon l'une quelconque des revendications précédentes, **caractérisée en ce que** la surface de guidage (90) de l'élément de guidage (9) est agencée selon un angle d'environ 10° à 45°, de préférence d'environ 15° à 30° par rapport au côté supérieur du profilé de surface de glissement (3).

4. Rampe de rail conducteur (1) selon l'une quelconque des revendications précédentes, **caractérisée en ce que** la surface de guidage (90) de l'élément de guidage (9) est agencée de manière à peu près parallèle dans la direction longitudinale L du profilé de surface de glissement (3).

5. Rampe de rail conducteur (1) selon l'une quelconque des revendications précédentes, **caractérisée en ce que** le dispositif de guidage (7) est agencé par liaison de matière à l'extrémité libre (10) de la rampe de rail conducteur (1).

6. Rampe de rail conducteur (1) selon l'une quelconque des revendications 1 à 4, **caractérisée en ce que** le dispositif de guidage (7) est agencé par adhérence à l'extrémité libre (10) de la rampe de rail conducteur (1).

7. Rampe de rail conducteur (1) selon l'une quelconque des revendications précédentes, **caractérisée en ce que** le matériau du dispositif de guidage (7) présente une résistivité de passage d'environ 10¹² ohms × cm selon la norme DIN EN 62631-3-1 - rectification 1 - septembre 2018.

8. Rampe de rail conducteur (1) selon l'une quelconque des revendications précédentes, **caractérisée en ce que** le matériau du dispositif de guidage (7) présente une résistivité de surface d'environ 10¹² ohms selon la norme DIN EN 62631-3-2 rectification 1 - 2018-09.
